# EUROPÄISCHE PATENTSCHRIFT

(11) **EP 2 076 950 B1**
(45) Veröffentlichungstag und Bekanntmachung des Hinweises auf die Patenterteilung: **27.04.2016**
(21) Anmeldenummer: 07802009.6
(22) Anmeldetag: 30.08.2007
(51) Int. Cl.: H02G 3/06, H02G 15/04

(54) **KABELVERSCHRAUBUNGSVORRICHTUNG**
THREADED CABLE GLAND
DISPOSITIF PASSE-CÂBLE À VIS

(30) Priorität: 11.10.2006 DE 102006048242
(43) Veröffentlichungstag der Anmeldung: 08.07.2009
(73) Patentinhaber: Eaton Protection Systems IP GmbH & Co. KG, 12529 Schönefeld (DE)
(72) Erfinder: NAUMANN, Reiner, 68239 MAnnheim (DE); SCHWARZ, Gerhard, 69436 Schönbrunn (DE)
(74) Vertreter: Grünecker Patent- und Rechtsanwälte PartG mbB
(86) Internationale Anmeldenummer: PCT/EP2007/007590
(87) Internationale Veröffentlichungsnummer: WO 2008/043412

(56) Entgegenhaltungen:
- EP-A- 0 515 200
- EP-A- 1 077 517
- GB-A- 2 147 155
- US-A- 3 055 972

## Beschreibung

Die Erfindung betrifft eine Kabelverschraubungsvorrichtung mit wenigstens einem Einschraubstutzen, einem auf dem Einschraubstutzen außen angeordneten Anschlagring, einer auf dem Einschraubstutzen bewegbaren Druckmutter und einem innerhalb des Einschraubstutzens angeordneten Dichtelement.

Solche Kabelverschraubungsvorrichtungen dienen als Schutz eines elektrischen Betriebsmittels wie Schaltschrank, Abzweigdose oder dergleichen, vor mechanischen Einflüssen, Staub und Feuchtigkeit, wobei durch die Kabelverschraubung ein Kabel fest und dicht mit einem Gehäuse des entsprechenden Betriebsmittels verbunden wird. Das Kabel wird durch die Kabelverschraubungseinrichtung in das Gehäuse eingeleitet und die Kabelverschraubungsvorrichtung kann zusätzliche Funktionen wie Abbindung, Isolierung, Zugentlastung und dergleichen übernehmen.

Insbesondere in explosionsgefährdeten Bereichen sind die entsprechenden Gehäuse, in die solches Kabel eingeleitet wird, flammen- und/oder explosionsgeschützt. Dadurch werden auch bestimmte Anforderungen an die Kabelverschraubungsvorrichtung gestellt. Beispielsweise muss die entsprechende Abdichtung des Kabels innerhalb der Kabelverschraubungsvorrichtung durch vorgegebene Spaltgrößen flammengeschützt sein. Dazu ist in der Regel eine entsprechende Wartung der Kabelverschraubungsvorrichtung zu bestimmten Zeiten erforderlich, bei der insbesondere die entsprechenden Spaltgrößen innerhalb dieser Vorrichtung hinsichtlich Flammenschutz überprüft werden.

Es hat sich außerdem herausgestellt, dass sich in Abhängigkeit von klimatischen Bedingungen oder der Alterung des Kabels und insbesondere dessen Isolation sowie auch in Abhängigkeit von der Alterung eines entsprechenden Dichtelements der Kabelverschraubungsvorrichtung gegebenenfalls die Spaltbreiten verändern und dadurch der Flammenschutz beeinflusst wird.

GB 2 147 155 A zeigt eine Kabelverschraubungsvorrichtung mit einem Einschraubstutzen und einem Anschlagring. Auf dem Einschraubstutzen ist eine Mutter aufgeschraubt. Diese ist an ihrem Ende mit einer Druckmutter versehen. Zwischen Druckmutter und einem zuweisenden Ende des Einschraubstutzen sind ein Ring und ein Dichtring angeordnet. Der Dichtring dient zur Abdichtung eines entsprechenden Kabels, während der weitere Ring nur bei entsprechend hoher Temperatur zum Einsatz kommt. Bei einer solchen hohen Temperatur wird der Dichtring in der Regel zerstört, und der weitere Ring expandiert in dichtende Anlage mit dem entsprechenden Kabel.

EP 0 515 200 A beschreibt eine Kabelverschraubungsvorrichtung mit Einschraubstutzen, einem auf dem Einschraubstutzen außen angeordneten Anschlagring, einer auf dem Einschraubstutzen aufgeschraubten Druckmutter und innerhalb des Einschraubstutzens angeordnetem Dichtelement. Zusätzlich ist ein Abstützring vorgesehen, der das Dichtelement abstützen soll, sodass es bei entsprechendem Aufschrauben der Druckmutter in Richtung Kabel ablenkbar ist.

US 3,055,972 A zeigt eine Kabelverschraubungsvorrichtung mit einer Hülse und einer Druckmutter in Hülsenform. Zwischen der Druckmutter und einer Schulter im Inneren der Hülse sind ein elastisches Abdichtelement, ein Ring und eine Unterlegscheibe zwischen Druckmutter und Hülse angeordnet.

EP 1077517 A2 beschreibt eine Kabelverschraubungsvorrichtung mit einer Vielzahl von Einzelteilen, zu denen bspw. ein Dichtring, ein Führungsring und ein Abstandselement gehören. Für das Abstandselement sind verschiedene Ausführungsformen dargestellt, wie bspw. auch eine Schraubendruckfeder.

Der Erfindung liegt die Aufgabe zugrunde, eine Kabelverschraubungsvorrichtung dahingehend zu verbessern, dass über einen langen Zeitraum das entsprechende Dichtelement selbsttätig immer in entsprechender Anlage mit einer Außenfläche des Kabels gehalten wird und gleichzeitig feststellbar ist, ob das entsprechende Nachdrückelement noch wirksam ist.

Diese Aufgabe wird durch die Merkmale des Patentanspruchs 1 gelöst.

Erfindungsgemäß ist zwischen Druckmutter und Dichtelement innerhalb der Einschraubhülse ein Nachdrückelement angeordnet, das von der Druckmutter in Richtung Dichtelement druckbeaufschlagt ist. Dieses Nachdrückelement dient dazu, das Dichtelement bei gegebenenfalls sich ändernden klimatischen Bedingungen und damit sich ändernder Abdichtung zwischen Kabel und Dichtelement der Kabelverschraubungsvorrichtung letzteres wieder in besseren Kontakt und Anlage mit dem Kabel zu bringen, so dass die entsprechenden Spaltgrößen nicht durch sich ändernde klimatische Bedingungen oder dergleichen variieren. Das heißt, das Dichtelement wird im Wesentlichen immer durch das Nachdrückelement zusätzlich in abdichtende Anlage gedrückt.

Bei entsprechender Druckausübung auf das Nachdrückelement durch die Druckmutter wird dieses zumindest über einen bestimmten Zeitraum selbsttätig das Dichtelement immer in entsprechender Anlage mit der Außenfläche des Kabels halten. Es besteht allerdings die Möglichkeit, dass nach einem längeren Zeitraum die Nachstellmöglichkeit des Nachdrückelements aufgebraucht ist, so dass ein weiteres Nachdrücken nicht mehr möglich ist. Um dieses gegebenenfalls zu kennzeichnen, ist ein dem Nachdrückelement zugeordnetes Anzeigeelement vorgesehen. Je nach noch im Nachdrückelement vorhandener Nachdrückkraft ändert sich das Anzeigeelement beispielsweise in seiner Position oder dergleichen. Dadurch kann in einfacher Weise festgestellt werden, ob einerseits das Nachdrückelement wirksam ist und andererseits noch weiter wirksam sein kann.

Erfindungsgemäß ist es dadurch möglich, beispielsweise die Wartungsabstände der Kabelverschraubungsvorrichtung zu erhöhen.

Um in einfacher Weise eine entsprechende Nachdrückkraft erzeugen zu können, kann das Nachdrückelement ein durch die Druckmutter in seiner Vorspannung einstellbares Federelement sein. Je nach Stellung der Druckmutter auf dem Einschraubstutzen weist das Federelement eine andere Vorspannung auf und ist damit einstellbar. Es besteht damit gegebenenfalls auch die Möglichkeit, an einem späteren Zeitpunkt die Spannung des Federelements zu erhöhen und nachzustellen.

Ein einfaches Beispiel für ein Federelement ist eine Schraubendruckfeder, wobei auch mehrere Schraubendruckfedern, insbesondere zur Anpassung einer Federkennlinie das entsprechende Federelement bilden können.

Um in einfacher Weise das Dichtelement durch Beaufschlagung der Druckmutter und des Federelements in Richtung eines Kabels beziehungsweise dessen Isolierung innerhalb des Einschraubstutzens drücken zu können, kann der Einschraubstutzen zumindest eine Durchmesserverengung in seiner Innenbohrung zur Ablenkung des Dichtelements im Wesentlichen radial nach innen aufweisen.

Eine einfache Möglichkeit eine solche Durchmesserverengung zu realisieren kann darin bestehen, dass die Durchmesserverengung als wenigstens eine in der Innenbohrung radial nach innen und schräg von der Druckmutter fortlaufende Ablenkschräge zur Ablenkung eines unteren Endes des Dichtelements ausgebildet ist. Wird das Dichtelement durch die Druckmutter und das Federelement in Richtung Durchmesserverengung beziehungsweise Ablenkschräge gedrückt, erfolgt eine Ablenkung radial nach innen und entsprechend eine Anlage und ein Anpressen an ein durch die Kabelverschraubungsvorrichtung durchgeführtes Kabel.

Das Dichtelement kann in unterschiedlicher Weise ausgebildet sein. Um es insbesondere in Längsrichtung des Einschraubstutzens mit ausreichender Länge auszubilden, kann es eine Dichthülse mit im Wesentlichen konstanter Wandstärke entlang ihrer Länge sein. Durch die konstante Wandstärke ist sichergestellt, dass im Wesentlichen die gleiche Kraft zur Ablenkung des Dichtelements radial nach innen auch bei einem weiteren Verschieben des Dichtelements in seiner Längsrichtung aufgebracht werden muss. Außerdem ist ein solches Dichtelement einfacher herstellbar.

Um vereinfacht einen Kontakt zwischen Nachdrückelement und Dichtelement herstellen zu können, kann dieses am oberen und/oder unteren Ende eine sich radial nach innen erstreckende Flachseite aufweisen. Auf dieser Flachseite steht das Nachdrückelement auf und kann entlang des gesamten Umfangs das Dichtelement in Richtung Durchmesserverengung beziehungsweise Ablenkschräge drücken. Sind Flachseiten an beiden Enden entsprechend ausgebildet, muss nicht auf eine bestimmte Einsetzrichtung der Dichthülse in die Innenbohrung des Einschraubstutzens geachtet werden.

Um das Nachdrückelement auch gegenüberliegend zur Flachseite der Dichthülse gut halten und in vorteilhafter Weise entsprechenden Druck auf das Nachdrückelement ausüben zu können, kann die Druckmutter eine insbesondere umlaufende, in Richtung Nachdrückelement offene Haltenut aufweisen. In diese Haltenut ist das Nachdrückelement mit seinem der Dichthülse beziehungsweise dem Dichtelement gegenüberliegenden Ende eingesetzt.

Eine einfache Möglichkeit eine solche Haltenut auszubilden, ist deren Anordnung auf einer Unterseite eines radial nach innen verlaufenden Randflansches der Druckmutter.

Der Randflansch kann weiterhin auch zur Umrandung des entsprechenden Kabels dienen, insbesondere wenn er einem oberen Ende der Druckmutter eine Einführöffnung für das Kabel umrandet.

Wird die Kabelverschraubungsvorrichtung in ein entsprechendes Gehäuse eines elektrischen Betriebsmittels zumindest teilweise eingesetzt, wird diese Einsetzstellung durch den Anschlagring festgelegt. Dabei besteht die Möglichkeit, dass der Anschlagring einteilig mit dem Einschraubstutzen gebildet ist. Dadurch ist die Einsetzstellung der Kabelverschraubungsvorrichtung eindeutig festgelegt, da der Einschraubstutzen nur bis zur Anlage des Anschlagrings von außen am Gehäuse des Betriebsmittels einsetzbar ist. Um allerdings gegebenenfalls die Einsetztiefe variieren zu können, kann der Anschlagring außen auf dem Einschraubstutzen verstellbar aufgeschraubt sein. Dazu weist in der Regel der Einschraubstutzen ein Außengewinde auf, das beispielsweise auch zum Aufschrauben der Druckmutter verwendbar ist.

Ein einfaches Beispiel für ein solches Anzeigeelement kann ein mit dem Nachdrückelement entgegengesetzt zur Nachdrückrichtung in Kontakt stehender Anzeigestift sein.

Ein solcher Anzeigestift kann an einer entsprechenden Stelle aus der Kabelverschraubungsvorrichtung vorstehen oder durch ein Sichtfenster beispielsweise im Einschraubstutzen oder dergleichen sichtbar sein Bei einem vorteilhaften Ausführungsbeispiel kann der Anzeigestift in einer nach oben offenen Stiftbohrung im Bereich des Randflansches verschieblich gelagert sein. Je nach entsprechender Stellung des Anzeigestiftes innerhalb der Stiftbohrung können dann Rückschlüsse auf die Wirksamkeit des Nachdrückelements getroffen werden.

Es besteht die Möglichkeit, den Anzeigestift separat vom Nachdrückelement herzustellen und beispielsweise an einem Ende vom Nachdrückelement mit Druckkraft zu beaufschlagen. Lässt die entsprechende Druckkraft innerhalb des Nachdrückelements nach, wird auch die Druckbeaufschlagung auf den Anzeigestift vermindert. Es besteht ebenfalls die Möglichkeit, den Anzeigestift durch ein freies, insbesondere Richtung Stiftbohrung umgebogenes Ende der Schraubendruckfeder zu bilden. In dieser Weise ist der Anzeigestift einteilig mit der Schraubendruckfeder gebildet.

Um im Wesentlichen immer mit gleicher Kraft das Dichtelement in Richtung Durchmesserverengung beziehungsweise Ablenkschräge drücken zu können und damit auch eine entsprechende gleichartige Abdichtung zwischen Dichtelement und durchgeführten Kabel zu erreichen, kann das Nachdrückelement eine im Wesentlichen konstante Federkennlinie aufweisen. Das bedeutet, dass das Nachdrückelement beispielsweise in Form einer Schraubendruckfeder im Wesentlichen immer mit der gleichen Kraft in Richtung Dichtelement drückt, auch wenn dieses weiter in Richtung Ablenkschräge gedrückt wird.

Die entsprechenden Teile der Kabelverschraubungsvorrichtung können aus unterschiedlichen Materialien gebildet sein. Beispielsweise können sie aus Metall oder Kunststoff hergestellt sein. Es sind auch Kombinationen aus diesen Materialien denkbar, in dem beispielsweise der Einschraubstutzen aus Metall und die Druckmutter aus Kunststoff hergestellt ist.

Es besteht ebenfalls die Möglichkeit, die entsprechende Einführöffnung in der Druckmutter zum Staubschutz durch einen Blindstopfen oder dergleichen zu verschließen, so lange noch kein entsprechendes Kabel durch die Kabelverschraubungsvorrichtung hindurchgeführt ist. Weiterhin kann die erfindungsgemäße Kabelverschraubungsvorrichtung einen Knickschutz, eine Zugentlastung und dergleichen umfassen.

Im Folgenden wird ein vorteilhaftes Ausführungsbeispiel der Erfindung anhand der in der Zeichnung beigefügten Figuren näher erläutert. Es zeigen:
- Figur 1: eine perspektivische Seitenansicht eines Ausführungsbeispiels einer erfindungsgemäßen Kabelverschraubungsvorrichtung;
- Figur 2: eine Draufsicht auf die Kabelverschraubungsvorrichtung nach Figur 1, und
- Figur 3: einen Schnitt entlang der Linie III-III aus Figur 2.

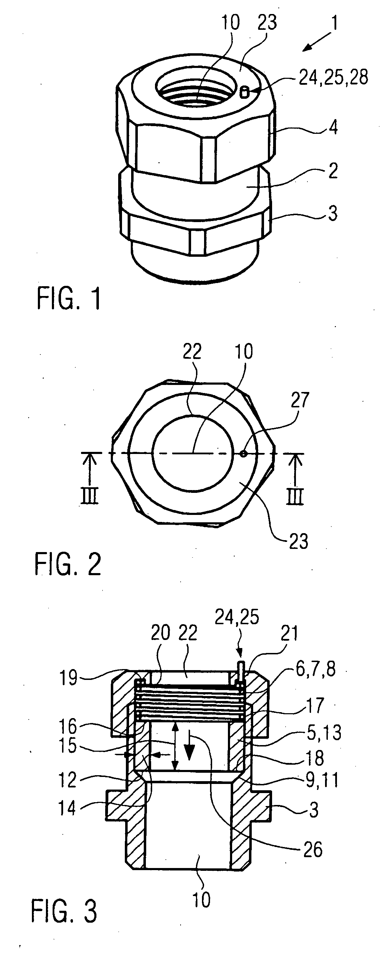

In Figur 1 ist eine perspektivische Seitenansicht eines Ausführungsbeispiels einer erfindungsgemäßen Kabelverschraubungsvorrichtung 1 dargestellt. Die Kabelverschraubungsvorrichtung 1 umfasst zumindest einen Einschraubstutzen 2, einen Anschlagring 3, eine Druckmutter 4, ein Dichtelement 5, siehe Figur 3 und ein Nachdrückelement 6. Der Einschraubstutzen 2 weist eine Innenbohrung 10 auf, die in etwa mittig in Längsrichtung des Einschraubstutzens 2 eine Durchmesserverengung 9 in Form einer Ablenkschräge 11 aufweist. Die Ablenkschräge erstreckt sich radial nach innen und schräg fortlaufend relativ zur Druckmutter 4, das heißt in Figur 3 schräg nach unten in Richtung zum Anschlagring 3.

Bei dem dargestellten Ausführungsbeispiel ist der Anschlagring 3 einteilig mit dem Einschraubstutzen 2 ausgebildet. Das zumindest im oberen Teil des Einschraubstutzens 2 ausgebildete Gewinde dient zum Aufschrauben der Druckmutter 4. Das Gewinde kann sich auch über die gesamte Länge des Einschraubstutzens 2 erstrecken und bei einem weiteren Ausführungsbeispiel kann der Anschlagring 3 verstellbar auf der Außenseite des Einschraubstutzens 2 mittels dieses Gewinde aufgeschraubt sein.

Der entsprechende Außendurchmesser des Einschraubstutzens 2 ist über seine gesamte Länge im Wesentlichen konstant. Innerhalb der Innenbohrung 10 des Einschraubstutzens 2 ist das Dichtelement 5 in Form einer Dichthülse 13 angeordnet. Diese weist im Wesentlichen eine konstante Wandstärke 14 über ihre gesamte Länge 15 auf. An oberen und unteren Enden 16, 12 ist die Dichthülse 13 mit Flachseiten 17, 18 ausgebildet. Eine Flachseite ist in Figur 3 am Anfang der Ablenkschräge 11 zur Ablenkung radial nach innen bei weiterer Druckausübung durch die Druckmutter 4 angeordnet. Die andere Flachseite 17 dient zur Anlage des Nachdrückelements 6. Dieses ist als Federelement 7 und insbesondere als Schraubendruckfeder 8 ausgebildet. Gegenüberliegend zur Dichthülse 13 ist die Schraubenddruckfeder 8 in einer Haltenut 19 an ihrem oberen Ende eingesetzt. Diese Haltenut 19 ist auf einer Unterseite 20 eines radial nach innen vorstehenden Randflansches 21 gebildet. Der Randflansch 21 umgrenzt am oberen Ende 23 der Druckmutter 4 die entsprechende Einführöffnung 22. Diese erstreckt sich in Verlängerung der Innenbohrung 10 und dient zusammen mit dieser zur Aufnahme eines nicht dargestellten Kabels.

Es besteht ebenfalls die Möglichkeit mehr als ein Kabel mittels der Kabelverschraubungsvorrichtung in ein Gehäuse eines entsprechenden elektrischen Betriebsmittels einzuführen. Ein solches elektrisches Betriebsmittel ist beispielsweise eine Abzweigdose, ein Schaltschrank oder dergleichen. Diese Betriebsmittel sind gegebenenfalls in einem explosionsgefährdeten Bereich angeordnet, so dass sowohl die Gehäuse als auch die entsprechende Kabelverschraubungsvorrichtungen flammengeschützt ausgebildet sind. Dies bedeutet, dass entsprechende Spaltbreiten zwischen Dichtelement und Kabel innerhalb der Kabelverschraubungsvorrichtung vorgegebene Abmessungen nicht überschreiten.

Innerhalb des Randflansches 21 ist eine Stiftbohrung 27 ausgebildet. Diese ist nach Figur 2 in etwa mittig in radialer Richtung im entsprechenden Randflansch angeordnet direkt oberhalb der Haltenut 19, siehe auch Figur 3. Figur 3 entspricht dabei einem Schnitt entlang der Linie III-III aus Figur 2 und Figur 2 einer Draufsicht auf das Ausführungsbeispiel der Kabelverschraubungsvorrichtung nach Figur 1.

Die Stiftbohrung 27 dient zur Aufnahme eines Anzeigeelements 24 in Firm eines Anzeigestiftes 25. Nach Figur 1 und nach Figur 3 ist der Anzeigestift 25 so angeordnet, dass er teilweise aus der Stiftbohrung 27 nach oben vorsteht. Ein unteres Ende des Anzeigestiftes 25 ist in Kontakt mit dem Nachdrückelement 6 beziehungsweise mit der dieses Element bildenden Schraubendruckfeder 8, siehe Figur 3.

Es besteht ebenfalls die Möglichkeit, dass das Anzeigeelement 4 als umgebogenes freies Ende 28 der Schraubendruckfeder 8 ausgebildet ist, das entsprechend zu den Figuren 1 und 3 in die Stiftbohrung 27 von unten eingesteckt ist und aus dieser auf der Oberseite des Randflansches 21 vorsteht.

Im Folgenden wird kurz die Funktionsweise der erfindungsgemäßen Kabelverschraubungsvorrichtung anhand der Figuren 1 bis 3 erläutert.

In der Regel wird zuerst der Einschraubstutzen bis zur Anlage mit dem Anschlagring 3 an ein nicht dargestelltes Gehäuse eines Betriebsmittels von außen eingeschraubt, wobei dieses eine entsprechende Öffnung aufweist. Vorher oder auch hinterher wird ein entsprechendes Kabel durch die Kabelschraubungsvorrichtung in das Gehäuse des Betriebsmittels eingeführt. Nach entsprechender Anordnung des Kabels innerhalb des Einschraubstutzens 2 wird durch Aufschrauben der Druckmutter 4 über das Nachdrückelement 6 ein entsprechender Druck auf das Dichtelement 5 ausgeübt. Dieses wird in Richtung Ablenkschräge 11, siehe Figur 3 verschoben und durch diese Ablenkschräge radial nach innen zum Andrücken an eine entsprechende Isolierung des eingeführten Kabels umgelenkt. Die Druckausübung erfolgt dabei in einem solchen Umfang, dass die Spaltbreiten zwischen Dichtelement 5 und Kabel entsprechenden Anforderungen an den Flammenschutz genügen.

Sollten sich im Laufe der Zeit Variationen der Spaltbreite beispielsweise durch klimatische Änderungen oder dergleichen ergeben, erfolgt eine automatische Nachstellung mittels des Nachdrückelements 6 in Form beispielsweise der Schraubendruckfeder 8. Diese kann insbesondere eine konstante Federkennlinie aufweisen.

Das Nachdrücken in Nachdrückrichtung 26 erfolgt, bis keine Nachdrückkraft mehr im Nachdrückelement 6 gespeichert ist. Anschließend wird der Anzeigestift 25 weniger oder gar nicht mehr aus der entsprechenden Stiftbohrung 27 vorstehen, so dass dieser Anzeigestift 25 als Anzeigelement 24 dient. Mittels dieses Anzeigeelements 24 ist von außerhalb der Kabelverschraubungsvorrichtung 1 feststellbar, ob noch ein entsprechendes Nachdrücken erfolgt oder aber eine Wartung stattfinden muss.

## Patentansprüche

1. Kabelverschraubungsvorrichtung (1) mit einem Einschraubstutzen (2), einem auf dem Einschraubstutzen (2) außen angeordneten Anschlagring (3), einer auf dem Einschraubstutzen (2) aufgeschraubten Druckmutter (4) und einem innerhalb des Einschraubstutzens (2) ange-ordneten Dichtelement (5),
**dadurch gekennzeichnet,**
**dass** zwischen Druckmutter (4) und Dichtelement (5) innerhalb des Einschraubstutzens (2) ein Nachdrückelement (6) zur Beaufschlagung des Dichtelements (5) angeordnet ist, wobei dem Nachdrückelement (6) ein Anzeigeelement (24) zugeordnet ist.

2. Kabelverschraubungsvorrichtung nach Anspruch 1,
**dadurch gekennzeichnet,**
**dass** das Nachdrückelement (6) ein durch die Druckmutter (4) in seiner Vorspannung einstellbares Federelement (7) ist.

3. Kabelverschraubungsvorrichtung nach Anspruch 2,
**dadurch gekennzeichnet,**
**dass** das Federelement (7) wenigstens eine Schraubendruckfeder (8) umfasst.

4. Kabelverschraubungsvorrichtung nach einem der vorangehenden Ansprüche,
**dadurch gekennzeichnet,**
**dass** der Einschraubstutzen (2) zumindest eine Durchmesserverengung (9) in seiner Innenbohrung (10) zur Ablenkung des Dichtelements (5) radial nach innen aufweist.

5. Kabelverschraubungsvorrichtung nach Anspruch 4,
**dadurch gekennzeichnet,**
**dass** die Durchmesserverengung (9) als radial nach innen und schräg von der Druckmutter (4) fortlaufende Ablenkschräge (11) zur Ablenkung eines unteren Endes (12) des Dichtelements (5) ausgebildet ist.

6. Kabelverschraubungsvorrichtung nach einem der vorangehenden Ansprüche,
**dadurch gekennzeichnet,**
**dass** das Dichtelement (5) eine Dichthülse (13) mit im Wesentlichen konstanter Wandstärke (14) entlang ihrer Länge (15) ist.

7. Kabelverschraubungsvorrichtung nach einem der vorangehenden Ansprüche,
**dadurch gekennzeichnet,**
**dass** die Dichthülse (13) am oberen und/oder unteren Ende (12, 16) eine sich radial nach innen erstreckende Flachseite (17, 18) aufweist.

8. Kabelverschraubungsvorrichtung nach einem der vorangehenden Ansprüche,
**dadurch gekennzeichnet,**
**dass** die Druckmutter (4) eine insbesondere umlaufende, in Richtung Nachdrückelement (6) offene Haltenut (19) aufweist.

9. Kabelverschraubungsvorrichtung nach Anspruch 8,
**dadurch gekennzeichnet,**
**dass** die Haltenut (19) auf einer Unterseite (20) eines radial nach innen verlaufenden Randflansches (21) der Druckmutter (4) gebildet ist.

10. Kabelverschraubungsvorrichtung nach Anspruch 9,
**dadurch gekennzeichnet,**
**dass** der Randflansch (21) an einem oberen Ende (23) der Druckmutter (4) eine Einführöffnung (22) umrandet.

11. Kabelverschraubungsvorrichtung nach einem der vorangehenden Ansprüche,
**dadurch gekennzeichnet,**
**dass** der Anschlagring (3) einteilig mit dem Einschraubstutzen (2) gebildet ist.

12. Kabelverschraubungsvorrichtung nach einem der vorangehenden Ansprüche,
**dadurch gekennzeichnet,**
**dass** der Anschlagring (3) außen auf dem Einschraubstutzen (2) verstellbar aufgeschraubt ist.

13. Kabelverschraubungsvorrichtung nach Anspruch 1,
**dadurch gekennzeichnet,**
**dass** das Anzeigeelement (24) als mit dem Nachdrückelement (6) entgegengesetzt zur Nachdrückrichtung (26) in Kontakt stehender Anzeigestift (25) ausgebildet ist.

14. Kabelverschraubungsvorrichtung nach Anspruch 13,
**dadurch gekennzeichnet,**
**dass** der Anzeigestift (25) in einer nach oben offenen Stiftbohrung (27) im Bereich des Randflansches (21) verschieblich gelagert ist.

15. Kabelverschraubungsvorrichtung nach Anspruch 13 oder 14,
**dadurch gekennzeichnet,**
**dass** der Anzeigestift (25) durch ein freies, insbesondere in Richtung Stiftbohrung (27) umgebogenes Ende (28) der Schraubendruckfeder (8) gebildet ist.

16. Kabelverschraubungsvorrichtung nach einem der vorangehenden Ansprüche,
**dadurch gekennzeichnet,**
**dass** das Nachdrückelement (6) eine im Wesentlichen konstante Federkennlinie aufweist.

17. Kabelverschraubungsvorrichtung nach einem der Ansprüche 13 bis 15,
**dadurch gekennzeichnet,**
**dass** der Anzeigestift (25) separat zum Nachdrückelement (6) ausgebildet und von diesem druckbeaufschlagt ist.

## Claims

1. Threaded cable gland (1) with a threaded sleeve (2), a stop ring (3) externally arranged on the threaded sleeve (2), a retaining nut (4) screwed on the threaded sleeve (2), and a sealing element (5) arranged within the threaded sleeve (2),
**characterized in that**
a dwell pressure element (6) is disposed between the retaining nut (4) and the sealing element (5) within the threaded sleeve (2) for acting upon the sealing element (5), wherein an indication element (24) is associated to the dwell pressure element (6).

2. Threaded cable gland according to claim 1,
**characterized in that**
the dwell pressure element (6) is a spring element (7) the preload of which can be adjusted by the retaining nut (4).

3. Threaded cable gland according to claim 2,
**characterized in that**
the spring element (7) comprises at least one helical compression spring (8).

4. Threaded cable gland according to one of the preceding claims,
**characterized in that**
the threaded sleeve (2) comprises at least one reduction in diameter (9) in its internal bore (10) to deflect the sealing element (5) radially inwards.

5. Threaded cable gland according to claim 4,
**characterized in that**
the reduction in diameter (9) is embodied as deflecting inclination (11) extending continuously radially inwards and diagonally away from the retaining nut (4) to deflect a lower end (12) of the sealing element (5).

6. Threaded cable gland according to one of the preceding claims,
**characterized in that**
the sealing element (5) is a sealing sleeve (13) with an essentially constant wall thickness (14) along its length (15).

7. Threaded cable gland according to one of the preceding claims,
**characterized in that**
the sealing sleeve (13) comprises a flat side (17, 18) radially extending inwards at the upper and/or lower end (12, 16).

8. Threaded cable gland according to one of the preceding claims,
**characterized in that**
the retaining nut (4) comprises an in particular surrounding retaining groove (19) that is open towards the dwell pressure element (6).

9. Threaded cable gland according to claim 8,
**characterized in that**
the retaining groove (19) is formed on a bottom side (20) of an edge flange (21) of the retaining nut (4) extending radially inwards.

10. Threaded cable gland according to claim 9,
**characterized in that**
the edge flange (21) borders a leading-in opening (22) at an upper end (23) of the retaining nut (4).

11. Threaded cable gland according to one of the preceding claims,
**characterized in that**
the stop ring (3) is integrally formed with the threaded sleeve (2).

12. Threaded cable gland according to one of the preceding claims,
**characterized in that**
the stop ring (3) is externally screwed onto the threaded sleeve (2) so as to be adjustable.

13. Threaded cable gland according to claim 1,
**characterized in that**
the indication element (24) is embodied as indication pin (25) being in contact with the dwell pressure element (6) in a direction opposite to the dwell pressure direction (26).

14. Threaded cable gland according to claim 13,
**characterized in that**
the indication pin (25) is shiftably held in a pin boring (27) open to the top in the area of the edge flange (21).

15. Threaded cable gland according to claim 13 or 14,
**characterized in that**
the indication pin (25) is formed by a free end of the helical compression spring (8) that is bent over in particular towards the pin boring (27).

16. Threaded cable gland according to one of the preceding claims,
**characterized in that**
the dwell pressure element (6) comprises an essentially constant spring characteristic.

17. Threaded cable gland according to one of the preceding claims 13 to 15,
**characterized in that**
the indication pin (25) is embodied separately from the dwell pressure element (6) and the latter exerts a pressure thereon.

## Revendications

1. Dispositif passe-câble à vis (1) avec un connecteur à vis (2), un anneau de butée (3) agencé à l'extérieur du connecteur à vis (2), un écrou de compression (4) vissé sur le connecteur à vis (2), et un élément d'étanchéité (5) agencé à l'intérieur du connecteur à vis (2),
**caractérisé**
**en ce qu'**un élément de rappui (6) à appliquer sur l'élément d'étanchéité (5) est agencé entre l'écrou de compression (4) et l'élément d'étanchéité (5) à l'intérieur du connecteur à vis (2), moyennant quoi l'élément de rappui (6) est associé à un élément indicateur (24).

2. Dispositif passe-câble à vis selon la revendication 1,
**caractérisé**
**en ce que** l'élément de rappui (6) est un élément de ressort (7) réglable en précontrainte par l'écrou de compression (4).

3. Dispositif passe-câble à vis selon la revendication 2,
**caractérisé**
**en ce que** l'élément de ressort (7) comporte au moins un ressort de compression hélicoïdal (8).

4. Dispositif passe-câble à vis selon l'une des revendications précédentes,
**caractérisé**
**en ce que** le connecteur à vis (2) comporte au moins une réduction de diamètre (9) de son alésage interne (10) pour dévier l'élément d'étanchéité (5) radialement vers l'intérieur.

5. Dispositif passe-câble à vis selon la revendication 4,
**caractérisé**
**en ce que** la réduction de diamètre (9) est réalisée comme un chanfrein de déviation continu (11) orienté radialement vers l'intérieur et en oblique par rapport à l'écrou de compression (4) pour dévier une extrémité inférieure (12) de l'élément d'étanchéité (5).

6. Dispositif passe-câble à vis selon l'une des revendications précédentes,
**caractérisé**
**en ce que** l'élément d'étanchéité (5) est un manchon d'étanchéité (13) avec une épaisseur de paroi essentiellement constante (14) sur sa longueur (15).

7. Dispositif passe-câble à vis selon l'une des revendications précédentes,
**caractérisé**
**en ce que** le manchon d'étanchéité (13) présente à son extrémité supérieure et/ou inférieure (12, 16) une surface plane qui s'étend radialement vers l'intérieur (17, 18).

8. Dispositif passe-câble à vis selon l'une des revendications précédentes,
**caractérisé**
**en ce que** l'écrou de compression (4) comporte une rainure d'arrêt (19), en particulier une rainure circonférentielle ouverte en direction de l'élément de rappui (6).

9. Dispositif passe-câble à vis selon la revendication 8,
**caractérisé**
**en ce que** la rainure d'arrêt (19) est réalisée sur la face inférieure (20) d'une bride de bord qui s'étend vers l'intérieur (21) de l'écrou de compression (4).

10. Dispositif passe-câble à vis selon la revendication 9,
**caractérisé**
**en ce que** la bride de bord (21) entoure une ouverture d'introduction (22) à une extrémité supérieure (23) de l'écrou de compression (4).

11. Dispositif passe-câble à vis selon l'une des revendications précédentes,
**caractérisé**
**en ce que** l'anneau de butée (3) est réalisé d'une seule pièce avec le connecteur à vis (2).

12. Dispositif passe-câble à vis selon l'une des revendications précédentes,
**caractérisé**
**en ce que** l'anneau de butée (3) est vissé de manière réglable sur le connecteur à vis (2) à l'extérieur de celui-ci.

13. Dispositif passe-câble à vis selon la revendication 1,
**caractérisé**
**en ce que** l'élément indicateur (24) est réalisé sous forme d'une tige indicatrice (25) qui reste en contact avec l'élément de rappui (6), en direction opposée à la direction de rappui (26).

14. Dispositif passe-câble à vis selon la revendication 13,
**caractérisé**
**en ce que** la tige indicatrice (25) est montée de façon coulissante dans un trou de tige (27) ouvert vers le haut dans la zone de la bride de bord (21).

15. Dispositif passe-câble à vis selon la revendication 13 ou 14,
**caractérisé**
**en ce que** la tige indicatrice (25) est constituée par une extrémité pliée (28) libre du ressort de compression hélicoïdal (8), en particulier une extrémité en direction du trou de tige (27).

16. Dispositif passe-câble à vis selon l'une des revendications précédentes,
**caractérisé**
**en ce que** l'élément de rappui (6) présente une courbe caractéristique de ressort essentiellement constante.

17. Dispositif passe-câble à vis selon l'une des revendications 13 à 15,
**caractérisé**
**en ce que** la tige indicatrice (25) est réalisée séparément de l'élément de rappui (6) et est comprimée par celui-ci.
